# EUROPÄISCHE PATENTANMELDUNG

(11) **EP 1 359 552 A2**
(43) Veröffentlichungstag der Anmeldung: **05.11.2003**
(21) Anmeldenummer: 03008959.3
(22) Anmeldetag: 16.04.2003
(51) Int. Cl.: G08B 13/183

(54) **System zum Absichern von Arbeitsbereichen auf Verkehrswegen**

(30) Priorität: 29.04.2002 DE 10219215
(71) Anmelder: SIEMENS AKTIENGESELLSCHAFT, 80333 München (DE)
(72) Erfinder: Sachse, Thomas, Dr., 83052 Bruckmühl (DE)

(57) **Zusammenfassung**

Ein System in Gestalt eines Verfahrens und einer Vorrichtung zum Absichern eines Arbeitsbereiches (20) auf einem Verkehrsweg (10, 11) umfasst Detektionsmittel (30, 60) zum Erfassen einer Gefahrensituation, wobei die Detektionsmittel (30, 60) mit Signalisationsmitteln zum Abgeben eines Warnsignals derart zusammenwirken, dass bei Eintreten einer Gefahrensituation die Abgabe eines Warnsignals ausgelöst wird. Wenn die Detektionsmittel (30, 60) zum Erfassen von Gefahrensituationen, bei welchen ein Objekt (40, 50) eine Begrenzungsfläche (21) des Arbeitsbereiches (20) durchdringt, ausgebildet sind, können die gefährdeten Personen (40, 50), insbesondere eine die Gefahrensituation auslösende Person, sofort gewarnt werden, um durch eine Verhaltenskorrektur bzw. durch Fluchtmaßnahmen einen Unfall zu vermeiden bzw. seine Folgen einzugrenzen.

## Beschreibung

Die Erfindung bezieht sich auf ein System zum Absichern von Arbeitsbereichen auf Verkehrswegen in Gestalt einer Vorrichtung gemäß dem Oberbegriff des Patentanspruches 1 und eines Verfahrens gemäß dem Oberbegriff des Patentanspruches 11.

Durch den zunehmenden Auslastungsgrad der Verkehrswege, insbesondere der des Straßen- und Schienennetzes, sind immer häufiger Bau- und Unterhaltungsarbeiten an den Verkehrswegen aber auch Hilfs- und Aufräumungsarbeiten bei Pannen oder Unfällen durchzuführen. Trotz bereits existierender Sicherungsmaßnahmen, wie etwa Beschilderungen oder Absperrungen zur Kennzeichnung und Sicherung der Arbeitsstelle, treten immer wieder Unfälle mit Personenschäden auf. Dies liegt einerseits daran, dass Objekte des fließenden Verkehrs, wie z. B. Kraftfahrzeuge, in den Arbeitsbereich eindringen, andererseits Objekte, wie beschäftigte Personen oder andere Gegenstände, aus dem Arbeitsbereich austretend in den fließenden Verkehr gelangen. Zur Vermeidung von Unfallschäden ist es in beiden Fällen erforderlich, die gefährdeten und die unfallverursachenden Personen frühzeitig zu warnen.

Aus der deutschen Gebrauchsmusterschrift DE 298 24 592 U1 ist hierzu ein Warnsystem zur Sicherung von Arbeitsstellen bekannt, welches gefährliche Fahrzeugannäherungen vor Arbeitsstellen im Straßenraum zur frühzeitigen Warnung der Beschäftigten im Arbeitsbereich erkennt. Mit Hilfe der Lasermesstechnik werden sich nähernde Fahrzeuge erfasst und durch Abgabe eines Warnsignals auf die sich entwickelnde Gefahrensituation aufmerksam gemacht. Die Idee besteht hier darin, dass einem Crash mit der Absperreinrichtung ein bestimmbares Fahrverhalten vorangegangen sein muss. Dieses Fahrverhalten wird dabei in seinen messbaren Parametern mit dem Ziel analysiert, ein zeitlich vorgezogenes akustisches Warnsignal in Richtung Arbeitsbereich abzugeben. Damit werden zusätzlich verfügbare Zeiten zur Reaktion und zielgerichteten Flucht aus dem Gefahrenbereich verfügbar. Dieses bekannte Warnsystem vermag aber nicht im Arbeitsbereich beschäftigte Personen zu warnen, wenn sie selbst oder ein durch sie beeinflusstes Arbeitsgerät den Arbeitsbereich in Richtung fließender Verkehr verlassen. Es weist ferner den Nachteil auf, dass beim Eindringen von Objekten des fließenden Verkehrs, insbesondere von seitlich vorbeifahrenden Fahrzeugen, in den Arbeitsbereich kein Warnsignal ausgelöst wird.

Der Erfindung liegt daher die Aufgabe zugrunde, ein System zum Absichern von Arbeitsbereichen auf Verkehrswegen gemäß den Oberbegriffen der Patentansprüche 1 und 11 bereitzustellen, welches weitere Gefahrensituationen erkennt, um die Personensicherheit zu erhöhen.

Die Aufgabe wird erfindungsgemäß gelöst durch ein System in Gestalt einer Vorrichtung und eines Verfahrens der eingangs genannten Art mit den in den kennzeichnenden Teilen der Patentansprüche 1 und 11 angegebenen Merkmale. Die Erfindung geht davon aus, dass ein Arbeitsbereich auf einem Verkehrsweg in seiner räumlichen Ausdehnung, im einfachsten Fall durch Länge, Breite und Höhe, definierbar ist. Seine Begrenzungsflächen trennen den Arbeitsbereich derart von dem außerhalb liegenden Gefahrenbereich ab, dass bestimmte Gefahrensituationen vermieden werden, wenn Objekte beiderseits der Begrenzungsflächen von diesen einen gewissen Sicherheitsabstand einhalten. Als wesentliche Gefahrensituation wird erfindungsgemäß durch entsprechend ausgebildete Detektionsmittel erfasst, wenn ein Objekt eine Begrenzungsfläche des Arbeitsbereiches durchdringt. Indem bei Eintreten einer solchen Gefahrensituation durch Signalisationsmittel ein Warnsignal abgegeben wird, können beispielsweise beschäftigte Personen vom Verlassen des Arbeitsbereiches abgehalten werden. Ebenso können Maschinen oder Arbeitsgeräte, die versehentlich vom Baustellenpersonal aus dem Arbeitsbereich geführt werden, zurückgehalten werden. Desweiteren kann ein den Arbeitsbereich mit seinem Fahrzeug tangierender Fahrzeugführer durch ein Warnsignal vom zu starken Eintreten in den Arbeitsbereich abgehalten werden. Durch geeignete Bemessung einer Schutzzone innerhalb und außerhalb der Begrenzungsfläche eines Arbeitsbereiches kann ein Berühren bzw. teilweises Durchdringen der Begrenzungsfläche toleriert werden, so dass das durchdringende Objekt durch das Warnsignal alarmiert zur Rückkehr angehalten werden kann. Erfindungsgemäß wird so die Sicherheit von Personen, die in einem Arbeitsbereich auf einem Fahrweg beschäftigt sind oder sich an einem solchen vorbeibewegen, wesentlich erhöht.

In einer vorteilhaften Ausgestaltung der Erfindung weisen die Detektionsmittel Sende- und Empfangseinrichtungen für elektromagnetische Strahlung auf, die zum Abtasten einer Begrenzungsfläche des Arbeitsbereiches vorgesehen sind. Mittels elektromagnetischer Strahlung lässt sich eine definierte Begrenzungsfläche eines Arbeitsbereiches auf einfache Weise nachbilden und auf das Durchdringen von Objekten abtasten. Im Gegensatz zu mechanischen Detektionsmitteln, wie z. B. Drahtzäune oder -gitter, erlaubt der Einsatz von elektromagnetischer Strahlung die Nachbildung von Begrenzungsflächen, deren Durchdringung ohne gegenständliche Berührung erfolgt. Eine Durchdringung der Begrenzungsfläche eines Arbeitsbereiches kann damit zerstörungsfrei geschehen. Die Detektionsmittel lassen sich hierdurch in Form von handelsüblichen elektronischen bzw. optischen Geräten, wie beispielsweise Scanner oder Laser und entsprechende Sensoren, verwirklichen.

In einer besonderen Ausführungsform der Erfindung sind die Sende- und die Empfangseinrichtungen der Detektionsmittel an jeweils gegenüberliegenden Kanten einer Begrenzungsfläche des Arbeitsbereiches angeordnet. In an sich bekannter Lichtschrankentechnik kann das Durchdringen einer Begrenzungsfläche durch eine Unterbrechung eines Lichtstrahles erfasst werden, der von der Sendeeinrichtung an einer Kante der Begrenzungsfläche emittiert wird und ohne durchdringendes Objekt von der diesem Lichtstrahl zugeordneten Empfangseinrichtung an der gegenüberliegenden Kante der Begrenzungsfläche detektiert worden wäre. Wenn eine Begrenzungsfläche eines Arbeitsbereiches durch Paare sich einander gegenüberliegender Sende- und Empfangseinrichtungen eingesäumt wird, kann diese Begrenzungsfläche durch beliebig dichte bzw. feinmaschige optische Zäune bzw. Gitter nachgebildet werden.

Vorzugsweise sind die Sende- bzw. Empfangseinrichtungen zum Senden bzw. Empfangen von elektromagnetischer Strahlung im sichtbaren Wellenlängenbereich ausgebildet. Mit einer derartigen Visualisierung der Begrenzungsflächen des Arbeitsbereichs wird die Abtrennung des Arbeitsbereichs von seiner Umgebung für alle Beteiligten Personen plausibel und besser begreifbar. Im Übrigen wird der Aufbau eines erfindungsgemäßen Absicherungssystems erleichtert, da die Justage gegenüberliegender Detektionsmittel einfacher ist, wenn ein von einer Sendeeinrichtung emittierter Laserstrahl aufgrund seiner Sichtbarkeit schneller auf den zugeordneten Sensor der Empfangseinrichtung ausgerichtet werden kann.

Gemäß einer vorteilhaften Ausführungsform der Erfindung sind die Sende- und Empfangseinrichtungen an einem torförmigen Rahmen drehbar befestigt. Der torförmige Rahmen kann aus zwei Seitenpfosten und einem diese verbindenden Querträger bestehen, an welchem jeweils Sende- und Empfangseinrichtungen für elektromagnetische Strahlung befestigt sind. Der Abstand der Seitenpfosten kann an die Breite des Arbeitsbereiches angepasst werden, so dass torförmige Detektionsmittel auf einem Verkehrsweg, etwa längs eines Gleisabschnittes oder eines Fahrstreifens einer Autobahn, am Beginn und am Ende etwa eines baustellenbedingten Arbeitsbereiches aufgestellt werden können. Nachdem die beiden torförmigen Detektionsmittel grob aufeinander ausgerichtet wurden, kann über eine schwenk- bzw. drehbar ausgebildete Befestigung der Sende- und Empfangseinrichtungen am torförmigem Rahmen eine Feinjustierung vorgenommen werden.

In einer bevorzugten Ausgestaltung der Erfindung ist der die Sende- und Empfangseinrichtungen tragende Rahmen auf dem Verkehrsweg fahrbar ausgebildet. Dies erleichtert die Transportierbarkeit der erfindungsgemäß ausgebildeten Detektionsmittel, was deren Einsatz z. B. für Wanderbaustellen begünstigt. Bei Wanderbaustellen wird der Arbeitsbereich im Laufe der Bauarbeiten langsam in Richtung des Verkehrsweges bewegt, wie es z. B. bei einem Schienenwechsel oder bei Reinigungsarbeiten von Seitenpfosten auf einem bestimmten Streckenabschnitt des Verkehrsweges vorkommt. Dazu sind die torförmigen Rahmen mit Schienenrädern bzw. mit luftbereiften Rädern ausgestattet.

In einer anderen vorteilhaften Ausführungsform der Erfindung sind die Sende- und Empfangseinrichtungen in aufstellbare Warnbaken integriert. Hierbei werden vorteilhafterweise bekannte und gemäß den Richtlinien für die Baustellenabsicherung auf Bundesautobahnen vorgeschriebene Einrichtungen, welche leicht auf- und abbaubar sind, verwendet. Die bereits vorhandene Spannungsversorgung für die auf die Warnbaken aufgesetzten Blinkleuchten können für die Versorgung der Sendeund Empfangseinrichtungen genutzt werden. Bei mehreren längs eines Verkehrsweges aufgestellten Warnbaken können auch komplexere Arbeitsbereiche, insbesondere solche mit bogenförmigem Verlauf, vom fließenden Verkehr abgetrennt werden. Je stärker der Arbeitsbereich gebogen ausgebildet ist, desto kürzer müssen die Abstände zwischen den Warnbaken gewählt werden. Die Begrenzungsfläche des Arbeitsbereiches setzt sich aus mehreren jeweils ebenen Teilbegrenzungsflächen zusammen.

In einer anderen bevorzugten Ausgestaltung der Erfindung sind die Sende- und Empfangseinrichtungen zum Abtasten von Teilen von Begrenzungsflächen des Arbeitsbereiches abschnittsweise aktivierbar. Dies ermöglicht bei einer Grundausstattung von Sende- und Empfangseinrichtungen deren gezielten Einsatz, falls nur Teile der vollständigen Begrenzungsfläche eines Arbeitsbereiches überwacht und abgesichert werden sollen. Oft genügt es, die seitliche Begrenzungsfläche eines Arbeitsbereiches zu seiner benachbarten Fahrspur nachzubilden. Zum einen wird dadurch der Energieaufwand zur Versorgung der Detektionsmittel für die gegenüber liegende Seitenfläche, welche beispielsweise am ungefährlichen Fahrbahnrand liegt, sowie für die Deckfläche und die stirnseitigen Endflächen des Arbeitsbereiches gespart. Zum anderen wird dadurch ein irreführendes Warnsignal beim Durchdringen der zuletzt genannten, ungefährlichen Begrenzungsflächen vermieden.

In einer weiteren vorteilhaften Ausgestaltung der Erfindung weisen die Signalisationsmittel Signalgeber für akustische und/oder optische und/oder haptische Warnsignale auf. Je nachdem ob alle Personen aus dem Arbeitsbereich und seiner Umgebung oder nur bestimmte Personen gewarnt werden sollen, können Signalhörner, Blink- oder Rundumleuchten aber auch persönliche tragbare Vibrationsalarme zum Einsatz kommen.

In einer weiteren bevorzugten Ausführungsform der Erfindung ist bei Eintreten einer Gefahrensituation ein Warnsignal an die eine Begrenzungsfläche durchdringende Person abgebbar. Zur individuellen Warnung einer bestimmten Person, ohne andere zu irritieren, kann ein persönlicher Signalgeber mitgeführt werden. Mit Hilfe eines Datenübertragungssystems, in dem Sender und Empfänger eine eindeutige Zuordnung haben, wie z. B. der aus dem Mobilfunk bekannte DECT-Standard, ist die gezielte Ansteuerung eines von mehreren gleichen Signalgebern möglich.

Weitere Vorteile des erfindungsgemäßen Absicherungssystems werden durch Ausführungsbeispiele und anhand der Zeichnungen erläutert, in deren
- FIG 1: ein Arbeitsbereich längs einer geraden Fahrspur,
- FIG 2: ein Arbeitsbereich auf einer bogenförmigen Fahrspur,
- FIG 3: ein erstes Ausführungsbeispiel für Detektionsmittel in Vorderansicht,
- FIG 4: das erste Ausführungsbeispiel von Detektionsmitteln in Draufsicht,
- FIG 5: der Einsatz des ersten Ausführungsbeispiels von Detektionsmitteln in Draufsicht,
- FIG 6: der Einsatz des ersten Ausführungsbeispiels von Detektionsmitteln in Seitenansicht,
- FIG 7: der Einsatz des ersten Ausführungsbeispieles von Detektionsmitteln in Frontansicht und
- FIG 8: der Einsatz eines zweiten Ausführungsbeispieles von Detektionsmitteln in Draufsicht
schematisch veranschaulicht ist.

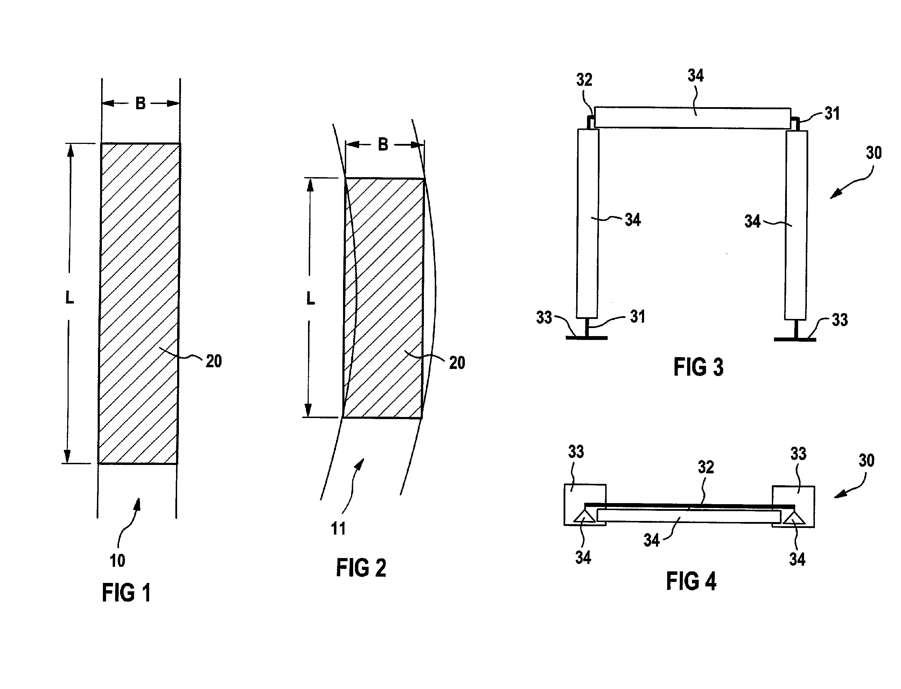

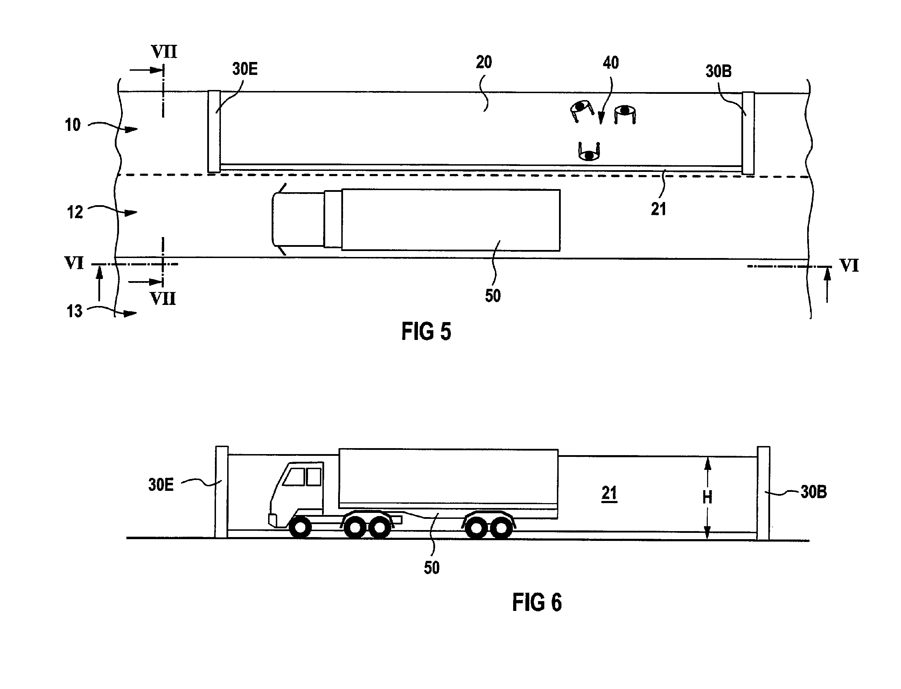

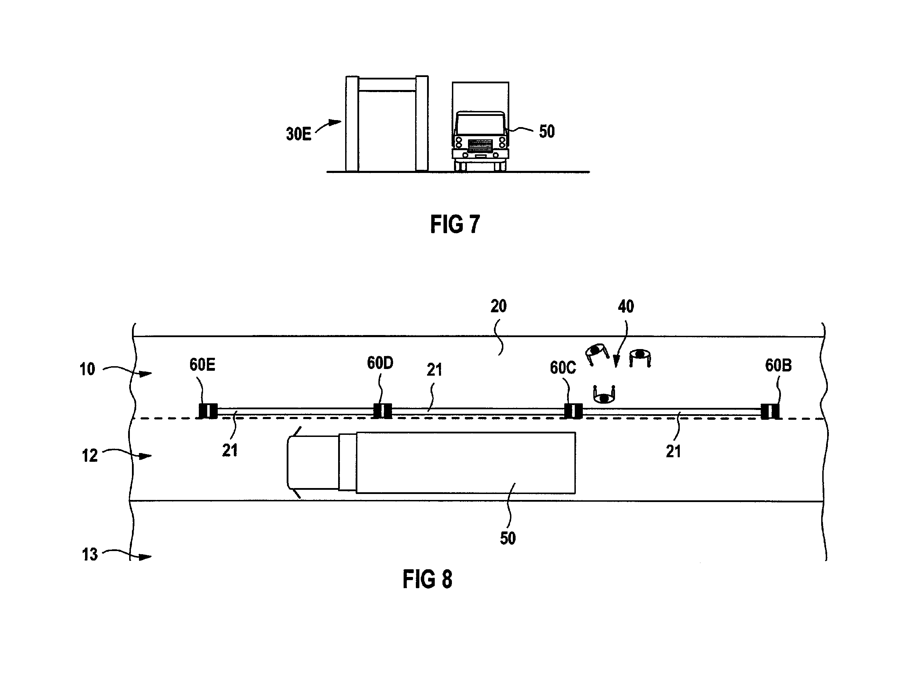

Nach FIG 1 weist ein auf einer geraden Fahrspur 10 eines Verkehrsweges angeordneter Arbeitsbereich 20 eine rechteckige Grundfläche der Länge L und der Breite B auf. Zusätzlich kann der Arbeitsbereich 20 noch durch eine Höhe (vgl. H in FIG 6) definiert sein. Der Arbeitsbereich 20 könnte beispielsweise eine Baustelle auf einem Fahrstreifen einer Autobahn oder auf einem Gleisabschnitt eines Schienennetzes sein. Der Arbeitsbereich 20 weist nach FIG 1 z. B. fünf zweidimensionale, rechteckige Begrenzungsflächen (vgl. 21 in FIG 5, 6 und 8) zu seiner Umgebung auf. Erfindungsgemäß sind Detektionsmittel (vgl. 30 in FIG 3 und 4; 30B, 30E in FIG 5, 6 und 7; 60B bis 60E in FIG 8) derart ausgebildet und am Arbeitsbereich 20 angeordnet, dass solche Gefahrensituationen erfasst werden, bei welchen ein Objekt - also eine Person oder ein durch diese beeinflussbares Gerät oder sonstige Gegenstände - eine Begrenzungsfläche durchdringt, und bei Eintreten einer solchen Gefahrensituation ein Warnsignal durch Signalisationsmittel abgegeben wird. Die Abmessungen B, L, H des Arbeitsbereiches 20 sind einerseits durch die Art der durchzuführenden Arbeiten sowie durch die Breite der Fahrspur 10 vorgegeben. Andererseits ist die Länge L des Arbeitsbereiches 20 als in der Regel größte Abmessung durch die Art der Detektionsmittel bestimmt. Hier können mechanische Werkstoffkennwerte oder auch die Reichweite optischer Detektionsmittel eine Beschränkung darstellen.

Darüber hinaus kann auch der Verlauf des Verkehrsweges die Länge L eines Arbeitsbereiches 20 verkürzen. Nach FIG 2 ist ein Arbeitsbereich 20 mit gleicher Breite B wie in FIG 1 auf einer bogenförmigen Fahrspur 11 kürzer auszubilden, wenn die Detektionsmittel ebene Begrenzungsflächen über einem rechteckigen Grundriss des Arbeitsbereiches 20 nachbilden. In diesem Fall erstrecken sich die seitlichen Begrenzungsflächen längs von Sekanten, so dass der Arbeitsbereich 20 sich am bogeninneren und bogenäußeren Rand nicht mit der Fahrspur 11 deckt. Dieser Effekt wächst bei vorgegebenem Bogenradius mit zunehmender Länge L des Arbeitsbereiches 20, was unerwünschte Konsequenzen haben kann. Verläuft auf der bogeninneren Seite eine benachbarte Fahrspur, so besteht die Gefahr, dass eine Person sich innerhalb des Arbeitsbereiches 20 auf die benachbarte Fahrspur begibt, ohne die Begrenzungsfläche zu durchdringen und damit ohne ein Warnsignal auszulösen. Andererseits könnte ein sich auf der benachbarten Fahrspur bewegendes Fahrzeug aufgrund einer Durchdringung der Begrenzungsfläche ein Warnsignal auslösen, welches unnötig ist, da der tatsächliche Wirkungskreis eines Baustellenpersonals sich auf die Fahrspur 11 beschränkt. Auf der bogenäußeren Seite hingegen würde eine den Arbeitsbereich 20 verlassende Person aufgrund der Durchdringung der Begrenzungsfläche ein Warnsignal auslösen, ohne die Fahrspur 11 nach außen verlassen zu haben. Je kleiner der Radius einer bogenförmigen Fahrspur 11 ist, desto kleiner ist die Länge L eines Arbeitsbereiches 20 zur Vermeidung der eben beschriebenen Folgen zu wählen. Bei längeren Baustellen auf kurvenreichen Verkehrswegen könnte hier durch eine Reihe hintereinander angeordneter erfindungsgemäß abgesicherter Arbeitsbereiche 20 mit jeweils rechteckiger Grundfläche Abhilfe für das erwähnte Problem geschaffen werden.

Ein erstes Ausführungsbeispiel erfindungsgemäßer Detektionsmittel 30 zum Erfassen von Gefahrensituationen weist gemäß FIG 3 und FIG 4, die im Folgenden gemeinsam beschrieben werden, einen torförmigen Rahmen auf. Der torförmige Rahmen umfasst zwei Seitenpfosten 31, die an ihren unteren Enden auf je einem Standfuß 33 lagern und deren obere Enden durch einen Querträger 32 verbunden sind. Am Rahmen sind Sende- und Empfangseinrichtungen 34 verstellbar befestigt. Die Sende- und Empfangseinrichtungen 34 werden durch eine Reihe von Aktuatoren bzw. Sensoren zum Senden bzw. Empfangen von elektromagnetischer Strahlung, vorzugsweise im sichtbaren Wellenlängenbereich gebildet. Die Energieversorgung ist durch eine nicht dargestellte, im Standfuß 33 integrierte Batterie gewährleistet. Als Aktuatoren werden vorzugsweise Laser eingesetzt. Zur einfacheren Transportierbarkeit derartiger Detektionsmittel 30 an sich und insbesondere für ihren Einsatz bei Wanderbaustellen, können unter den Standfüßen 33 Räder, zur Verwendung auf Gleisanlagen insbesondere Schienenräder, zur Verfahrbarkeit längs eines Verkehrsweges montiert sein.

Das in FIG 3 und FIG 4 beschriebene Ausführungsbeispiel von Detektionsmitteln 30 wird im Folgenden anhand eines praktischen Einsatzbeispieles anhand der FIG 5, FIG 6 und FIG 7 gemeinsam erläutert. Auf der rechten Fahrspur 10 einer zweispurigen Autobahn befindet sich ein baustellenbedingter Arbeitsbereich 20, an dessen Beginn Detektionsmittel 30B und an dessen Ende Detektionsmittel 30E aufgestellt sind. Zur Abtrennung des Arbeitsbereiches 20 von der linken Fahrspur 12, die für Fahrzeuge 50 freigegeben ist, sind die Detektionsmittel 30B, 30E derart angeordnet, dass bei Aktivierung der Sende- und Empfangseinrichtungen 34 am fahrbahnmittig aufgestellten Seitenpfosten 31 eine seitliche Begrenzungsfläche 21 des Arbeitsbereiches 20 optisch abtastbar ist. Hierfür sind die Sende- und Empfangseinrichtungen 34 so justiert, dass der Laserstrahl einer Sendeeinrichtung auf den zugeordneten Sensor der Empfangseinrichtung trifft. Über die Dichte der Anordnung von Aktuatoren und Sensoren in den Sende- und Empfangseinrichtungen 34 kann die Begrenzungsfläche 21 durch ein mehr oder weniger engmaschiges optisches Gitter nachgebildet werden. Wird Laserlicht im sichtbaren Wellenlängenbereich verwendet, so vereinfacht sich beim Aufbau der Detektionsmittel 30 die Justage der aufeinander auszurichtenden Sende- und Empfangseinrichtungen 34; zugleich wird dadurch die Begrenzungsfläche 21 für im Arbeitsbereich 20 tätige Personen 40 sowie für vorbeifahrende Fahrzeuge 50 führende Personen sichtbar und damit gegenwärtig. Durchdringt nun ein Objekt 40, 50 die Begrenzungsfläche 21, so wird wie bei einer Lichtschranke der Laserstrahl unterbrochen. Dies wird vom zugeordneten Sensor, der kein Licht mehr empfängt, registriert. Auf diese Weise werden Gefahrensituationen, bei welchen beispielsweise eine im Arbeitsbereich 20 beschäftigte Person 40 versehentlich durch die Begrenzungsfläche 21 austritt oder aber ein vorbeifahrendes Fahrzeug 50 aus Unachtsamkeit die Fahrspur 12 so stark verlässt, dass es durch die Begrenzungsfläche 21 eindringt, erfasst und bei Eintreten einer solchen Gefahrensituation durch nicht dargestellte Signalisationsmittel die Abgabe eines Warnsignals ausgelöst. Das akustische Warnsignal eines Signalhorns oder das optische Warnsignal von Blink- oder Rundumleuchten alarmiert sowohl die eine Gefahrensituation auslösende Person als auch die von der Gefahrensituation bedrohten Personen. Das Warnsignal bewegt den das Fahrzeug 50 führenden Fahrer zum Korrigieren seiner Bahn bzw. den Baustellenarbeiter 40 zur Rückkehr in den Arbeitsbereich 20. Andere im Arbeitsbereich 20 beschäftigte Personen 40 werden durch das Warnsignal zur Flucht auf die der Begrenzungsfläche 21 abgewandten Seite der Fahrspur 10 angehalten. Zur Vermeidung eines irreführenden, an alle Beteiligten gerichteten Warnsignals beim Durchdringen der Begrenzungsfläche 21 durch eine im Arbeitsbereich 20 beschäftigte Person 40, könnte alternativ ein persönliches Warnsignal nur an diese gefährdete Person gerichtet werden.

Hierzu könnten von dem im Arbeitsbereich 20 tätigen Personen 40 je ein persönlicher Vibrationsalarm getragen werden. Um zu gewährleisten, dass ein Warnsignal eindeutig einem bestimmten Warnsignalgeber zugeordnet werden kann, wird ein Datenübertragungssystem mit eindeutiger Zuordnung zwischen Sender und Empfänger verwendet. Hierfür eignet sich z. B. die DECT-Datenübertragung.

Ein weiteres Ausführungsbeispiel von Detektionsmitteln 60 eines erfindungsgemäßen Absicherungssystems eines Arbeitsbereiches 20 auf einem Verkehrsweg 10 weist nach FIG 8 Warnbaken auf, in die Sende- und Empfangseinrichtungen 34 integriert sind. Warnbaken sind aus Absperrmaßnahmen nach den "Richtlinien zur Sicherung von Arbeitsstellen" (RSA95) an sich bekannt. Sie weisen z. B. eine rot-weiß gestreifte, reflektierende Warnfläche und eine darüber geordnete Warnblinkleuchte auf. Auf einer Fahrspur 10 ist zur Abtrennung eines Arbeitsbereiches 20 von einer benachbarten, für den Verkehr freigegebenen Fahrspur 12 eine Begrenzungsfläche 21 optisch aufgebaut. Die Begrenzungsfläche 21 besteht hier aus drei Teilflächen, die jeweils nach dem oben beschriebenen Prinzip von sich gegenüberliegenden Sende- und Empfangseinrichtungen 34 nachgebildet sind. Die nicht dargestellten Sende- und Empfangseinrichtungen 34 sind integriert in einer am Beginn der Baustelle aufgestellten Warnbake 60B, in zwei weiteren Warnbaken 60C und 60D sowie in einer am Ende der Baustelle aufgestellten Warnbake 60E. Wie in oben beschriebener Weise werden von den Detektionsmitteln 60 Gefahrensituationen erfasst, bei welchen Personen 40, die im Arbeitsbereich 20 beschäftigt sind, oder Fahrzeuge 50, die am Baustellenbereich 20 vorbeifahren, die Begrenzungsflächen 21 durchdringen. Bei Eintreten einer solchen Gefahrensituation wird wieder ein entsprechendes Warnsignal abgegeben. In vorteilhafter Weise kann hier für die Sende- und Empfangseinrichtungen 34 die bereits vorhandene Stromversorgung der Blinkleuchten verwendet werden. Ein anderer Vorteil besteht darin, dass sich durch eine versetzte Anordnung der Warnbaken 60B bis 60E eine Begrenzungsfläche 21 mit im Winkel zueinander stehenden Teilflächen definieren lässt. Somit lassen sich auch Arbeitsbereiche 20 mit optimierter Raumausnutzung absichern, die sich über einen längeren Fahrbahnbogen erstrecken.

## Patentansprüche

1. Vorrichtung zum Absichern eines Arbeitsbereiches (20) auf einem Verkehrsweg (10, 11) mit Detektionsmitteln (30, 60) zum Erfassen einer Gefahrensituation, wobei die Detektionsmittel (30, 60) mit Signalisationsmitteln zum Abgeben eines Warnsignals derart zusammenwirken, dass bei Eintreten einer Gefahrensituation die Abgabe eines Warnsignals ausgelöst wird, **dadurch gekennzeichnet, dass** die Detektionsmittel (30, 60) zum Erfassen von Gefahrensituationen, bei welchen ein Objekt (40, 50) eine Begrenzungsfläche (21) des Arbeitsbereiches (20) durchdringt, ausgebildet sind.

2. Vorrichtung nach Anspruch 1, **dadurch gekennzeichnet, dass** die Detektionsmittel (30, 60) Sendeund Empfangseinrichtungen (34) für elektromagnetische Strahlung aufweisen, die zum Abtasten einer Begrenzungsfläche (21) des Arbeitsbereiches (20) vorgesehen sind.

3. Vorrichtung nach Anspruch 2, **dadurch gekennzeichnet, dass** die Sende- und die Empfangseinrichtungen (34) der Detektionsmittel (30 B, 30 E) an jeweils gegenüberliegenden Kanten einer Begrenzungsfläche (21) des Arbeitsbereiches (20) angeordnet sind.

4. Vorrichtung nach Anspruch 2 oder 3, **dadurch gekennzeichnet, dass** die Sende- bzw. Empfangseinrichtungen (34) zum Senden bzw. Empfangen von elektromagnetischer Strahlung im sichtbaren Wellenlängenbereich ausgebildet sind.

5. Vorrichtung nach einem der Ansprüche 1 bis 4, **dadurch gekennzeichnet, dass** die Sende- und Empfangseinrichtungen (34) an einem torförmigen Rahmen (31, 32) drehbar befestigt sind.

6. Vorrichtung nach Anspruch 5, **dadurch gekennzeichnet, dass** der die Sende- und Empfangseinrichtungen (34) tragende Rahmen (31, 32) auf dem Verkehrsweg (10, 11) fahrbar ausgebildet ist.

7. Vorrichtung nach einem der Ansprüche 1 bis 4, **dadurch gekennzeichnet, dass** die Sende- und Empfangseinrichtungen (34) in aufstellbare Warnbaken (60) integriert sind.

8. Vorrichtung nach einem der Ansprüche 1 bis 7, **dadurch gekennzeichnet, dass** die Sende- und Empfangseinrichtungen (34) zum Abtasten von Teilen von Begrenzungsflächen (21) des Arbeitsbereiches (20) abschnittsweise aktivierbar sind.

9. Vorrichtung nach einem der Ansprüche 1 bis 8, **dadurch gekennzeichnet, dass** die Signalisationsmittel Signalgeber für akustische und/oder optische und/oder haptische Warnsignale aufweisen.

10. Vorrichtung nach einem der Ansprüche 1 bis 9, **dadurch gekennzeichnet, dass** bei Eintreten einer Gefahrensituation ein Warnsignal an die eine Begrenzungsfläche (21) durchdringende Person abgebbar ist.

11. Verfahren zum Absichern eines Arbeitsbereiches (20) auf einem Verkehrsweg (10, 11), wobei Detektionsmittel (30, 60) Gefahrensituationen erfassen und bei Eintreten einer Gefahrensituation von mit den Detektionsmitteln (30, 60) zusammenwirkenden Signalisationsmitteln ein Warnsignal abgegeben wird, **dadurch gekennzeichnet, dass** die Detektionsmittel (30, 60) Gefahrensituationen erfassen, bei welchen ein Objekt (40, 50) eine Begrenzungsfläche (21) des Arbeitsbereiches (20) durchdringt.
